Europäisches Patentamt

European Patent Office

Office européen des brevets

(19)

(11)  EP 0 604 245 B1

(12)  FASCICULE DE BREVET EUROPEEN

(45) Date de publication et mention
de la délivrance du brevet:
08.10.1997  Bulletin 1997/41

(51) Int Cl.⁶: $G06T\ 5/20$, $G08B\ 13/194$

(21) Numéro de dépôt: 93402677.4

(22) Date de dépôt: 29.10.1993

(54)  **Procédé de détection d'apparition d'objets ponctuels dans une image**

Verfahren zur Erscheinungsdetektierung von Punktgegenständen in einem Bild

Method for detecting the appearance of dot objects in an image

(84) Etats contractants désignés:
DE GB IT

(30) Priorité:  21.12.1992  FR 9215582

(43) Date de publication de la demande:
29.06.1994  Bulletin 1994/26

(73) Titulaire: **SAT (Société Anonyme de
Télécommunications)**
75116 Paris (FR)

(72) Inventeurs:
• **Samy, Roger
F-75625 Paris Cédex 13 (FR)**
• **Duclos, Daniel
F-75625 Paris Cédex 13 (FR)**

(74) Mandataire: **Cabinet Martinet & Lapoux
BP 405
78055 Saint Quentin en Yvelines Cédex (FR)**

(56) Documents cités:
EP-A- 0 515 890        GB-A- 2 218 507
US-A- 4 789 933

## Description

La présente invention concerne un procédé de détection d'apparition d'objets ponctuels dans une image numérisée sous la forme d'une pluralité de pixels ayant des luminances respectives. Les objets à détecter dans l'image sont ponctuels et ont donc une taille sensiblement de l'ordre d'un pixel, typiquement quelques pixels.

Il est connu dans le domaine de l'imagerie infrarouge de représenter une image par un modèle à base d'un polynôme à deux variables, et dont des valeurs prises par ce polynôme sont une approximation des luminances respectives des pixels de l'image.

L'invention vise à modéliser une image de pixels à des fins de détection d'objets ponctuels, ou cibles, dans l'image.

A cette fin, un procédé de détection d'apparition d'objets ponctuels dans une image numérisée sous la forme d'une pluralité de pixels ayant des luminances respectives, est caractérisé en ce qu'il comprend pour chacun des blocs élémentaires de pixels centrés sur l'un respectif desdits pixels de l'image, les étapes suivantes :

une approximation polynomiale des luminances de pixels d'un anneau dudit bloc, ledit anneau étant composé des pixels dudit bloc situés à la périphérie d'un trou composé des autres pixels dudit bloc et localisé au centre dudit bloc,
une prédiction des luminances desdits pixels du trou en fonction de ladite approximation polynomiale afin de produire des luminances prédites,
une soustraction desdites luminances prédites aux luminances réelles des pixels dudit trou, donnant des luminances de différence, et
une détection d'objet ponctuel dans ledit bloc lorsque le rapport de l'une desdites luminances de différence relatives audit trou et d'une moyenne de luminances de différence sur l'ensemble de ladite image, est supérieur à un seuil prédéterminé.

L'approximation polynomiale selon l'invention consiste en la détermination de filtres de convolution à partir de bases polynomiales orthonormées relatives respectivement à des dimensions de l'image, et en des convolutions desdits pixels de l'anneau avec lesdits filtres de convolution en des coefficients respectifs d'un polynôme.

D'autres caractéristiques et avantages de la présente invention apparaîtront plus clairement à la lecture de la description suivante d'une réalisation préférée de l'invention, en référence aux dessins annexés correspondants dans lesquels :

- la figure 1 montre un bloc-diagramme schématique d'un système de pistage infrarouge ;
- la figure 2 est un bloc-diagramme d'un module de détection selon l'invention inclus dans le système de pistage infrarouge montré à la figure 1 ;
- la figure 3 est un bloc-diagramme détaillé d'une réalisation de circuits d'estimation et de prédiction inclus dans le module de détection ;
- la figure 4 est une représentation tridimensionnelle de luminances associées à un bloc de pixels de dimension $(2M + 1) (2N + 1) = 3 \times 3$ ;
- la figure 5 montre un bloc de pixels de dimension $3 \times 3$ avec un trou à un pixel ; et
- la figure 6 est un signal d'image de différence de luminances.

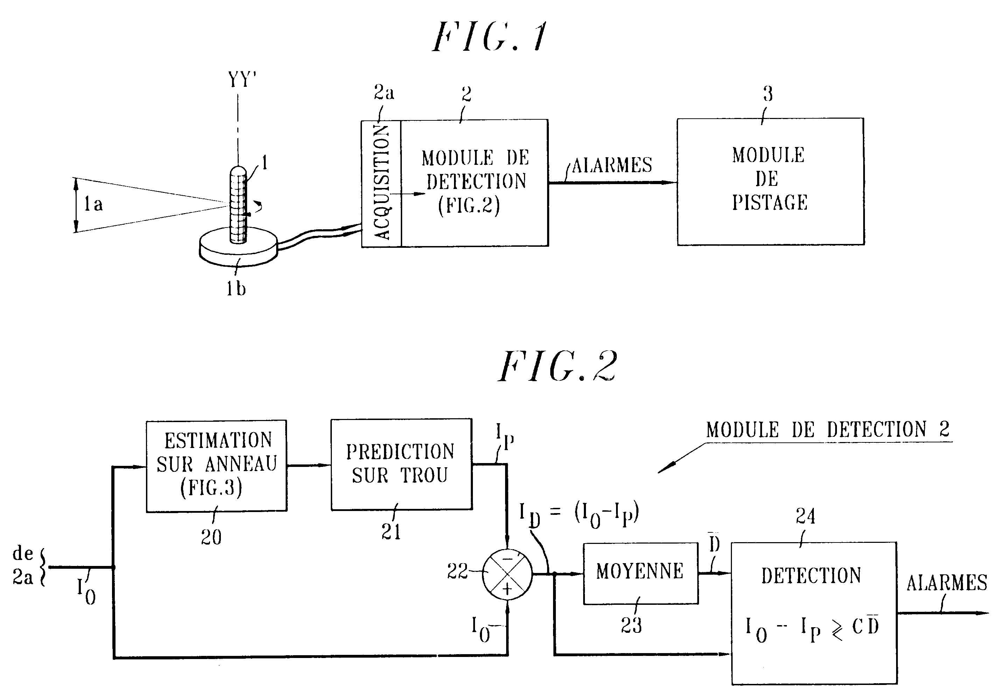

En référence à la figure 1, un système de pistage infrarouge comprend typiquement une barrette de détecteurs infrarouges 1 disposée verticalement et associée à un dispositif de focalisation la, un module de détection d'apparition d'objets ponctuels 2 et un module de pistage 3.

La barrette de détecteurs 1 et le dispositif de focalisation la sont montés sur un support tournant lb pour être entraînés en rotation à une vitesse angulaire constante autour d'un axe vertical YY'. Des sorties de la barrette de détecteurs 1 sont appliquées à une entrée d'un dispositif d'acquisition d'images infrarouges de l'espace environnant 2a pour en fournir cycliquement une image de pixels à un rythme suffisamment rapide.

L'espace environnant est ainsi analysé périodiquement pour un angle de gisement de 360 degrés. Le dispositif d'acquisition 2a inclut, en outre, des moyens de balayage pour sélectionner tour à tour chacune desdites sorties des détecteurs respectifs constituant la barrette 1. Ces moyens de balayage sont synchronisés avec la commande de rotation de la barrette 1 incluse dans le support la. En sortie, le dispositif d'acquisition 2a fournit un signal vidéo, ici numérique, représentant une image infrarouge glissante de l'espace environnant, par rafraîchissement cyclique.

Cette image glissante consiste en une pluralité de pixels. Chaque pixel est associé à une surface élémentaire d'image et une intensité de rayonnement infrarouge détectée à un instant donné par un détecteur de la barrette 1.

Pour chaque tour complet de l'ensemble 1-1a, le signal vidéo numérisé sortant du dispositif d'acquisition 2a supporte un certain nombre de luminances $p_{i,j}$ de pixels, par exemple codées en mots à 8 bits, chacun de ces mots de luminance $P_{i,j}$ étant représentatif du quotient de la luminosité émise par une portion élémentaire respective (pixel) de l'image de l'espace environnant par l'aire de cette portion. Ce signal vidéo numérisé sortant est appliqué à une entrée du module de détection 2. Ce dernier détecte dans l'image de l'espace environnant des cibles ou objets fixes ou mobiles quasi-ponctuels, et produit des alarmes en réponse aux cibles détectées. Ces cibles quasi-ponctuelles sont des portions très réduites de l'image ayant des dimensions typiquement de 1 à (4 x 4) pixels. Les alarmes produites par le module 2 sont appliquées à une entrée du module de pistage 3. Ce dernier suit l'évolution temporelle des cibles dans l'image afin "d'accrocher" ces cibles, par exemple dans un contexte de poursuite d'une cible se déplaçant sur le sol.

L'invention est orientée vers le module de détection 2. Un tel module de détection 2 peut être intégré dans un système différent de celui représenté à la figure 1, tel qu'un simple système de visualisation de cible dans une image.

En référence à la figure 2, un module de détection d'apparition d'objets ponctuels 2 selon l'invention comprend un circuit d'estimation sur anneau 20, un circuit de prédiction sur trou 21, un comparateur 22, un circuit de calcul de moyenne 23 et un circuit de détection 24.

Préalablement à la description du module de détection d'apparition est présenté un modèle mathématique connu d'approximation polynomiale d'une image de pixels. Ce modèle polynomial, notamment utilisé dans le domaine de l'imagerie, consiste en la représentation d'une image par un polynôme à deux variables qui est l'approximation des luminances de pixels de l'image situés au voisinage d'un pixel central de coordonnées discrètes $(u_o, v_o)$, et qui s'écrit sous la forme :

$$L(u_O + u, v_O + v) = k_{O,O} + k_{1,O}.u + k_{O,1}.v + k_{1,1}u.v + k_{2,O}.u^2 + k_{O,2}.v^2 + k_{2,1}.u^2.v + k_{1,2}.u.v^2 + ....$$

dans laquelle équation $k_{r,s}$, où r et s sont des entiers, désigne un coefficient du polynôme, L désigne une fonction d'intensité, ici la fonction de luminance, et $(u,v)$ dénote un couple de coordonnées, abscisse et ordonnée, de pixel dans un bloc d'image. Le polynôme L constitue un développement en série de Taylor au voisinage du pixel central de coordonnées $(u_O, v_O)$.

En référence à la figure 5, l'approximation polynomiale est réalisée sur chacun des blocs élémentaires $BE_{i,j}$, carrés ou rectangulaires, centrés sur un pixel respectif $p_{i,j}$ de l'image infrarouge. Les blocs élémentaires ont une dimension $(2M+1)x(2N+1)$, où M et N sont des entiers. Plus précisément, cette approximation polynomiale est utilisée selon l'invention pour estimer des luminances de pixels formant un anneau dans chaque bloc élémentaire $BE_{i,j}$. Le polynôme résultant de cette approximation polynomiale des luminances des pixels de l'anneau sert à prédire les luminances ponctuelles dans un trou de ce bloc élémentaire $BE_{i,j}$ le trou comportant un ou plusieurs pixels et étant localisé au centre du bloc élémentaire $BE_{i,j}$. L'anneau du bloc $BE_{i,j}$ est constitué par tous les pixels du bloc $BE_{i,j}$ situés à la périphérie du trou, dans lequel est effectuée une détection d'objet ponctuel, ou cible. En pratique, plusieurs dimensions de bloc élémentaire $BE_{i,j}$ et de trou peuvent être choisies en fonction notamment de la taille probable de la cible à détecter dans l'image. A titre d'exemple, des blocs élémentaires $BE_{i,j}$ de pixels ont des dimension de $(5 x 5)$ à $(7 x 7)$ et des trous associés ont des dimensions de 1 et $(4 x 4)$ pixels.

Le modèle mathématique de représentation polynomiale de l'anneau d'un bloc élémentaire de pixels $BE_{i,j}$ est le suivant. Une image de pixels peut être représentée par un plan sur lequel des points discrets (pixels) sont définis, et auxquels sont associées des luminances respectives. L'image est naturellement supportée par un plan à deux dimensions. Pour les deux variables dimensionnelles u et v de l'image sont définies respectivement deux bases polynômiales orthonormées de Tschebycheff. Le choix des dimensions de ces deux bases résulte d'un compromis entre une bonne localisation des pixels et une faible sensibilité aux bruits, notamment de texture.

Des vecteurs des deux bases polynomiales orthornomées respectives de dimension E et F peuvent être définis de la façon suivante :

| | |
|---|---|
| $P_a^o(u) = 1$ | $P_b^o(v) = 1$ |
| $P_a^1(u) = u$ | $P_b^1(v) = v$ |
| $P_a^2(u) = \mu_2/\mu_0.u$ | $P_b^2(v) = \gamma_2/\gamma_0.v$ |
| $P_a^3(u) = x^3 - (\mu_4/\mu_2)u$ | $P_b^3(v) = v^3 , (\gamma_4/\gamma_2)v$ |
| etc... | etc... |

et ainsi de suite, par récurrence en considérant que dans chaque base, les polynômes doivent consituer une base orthogonale. La norme suivante, sous forme de produit scalaire discret, est utilisée pour définir chacune des deux bases :

$$< P_a^e \mid P_a^{e+1} > = \sum_{u \in V} P_a^e(u) \cdot P_a^{e+1}(u) \ ,$$

$$< P_b^f \mid P_b^{f+1} > = \sum_{v \in V} P_b^f(v) \cdot P_b^{f+1}(v) \qquad (2)$$

où e et f sont respectivement compris entre 0 et (E-1), et 0 et (F-1),

en considérant que les coefficients des termes de plus haut degré dans les polynômes respectifs de plus haut degré des deux bases sont égaux à 1, c'est-à-dire que ces polynômes sont normalisés.

La définition de ces deux bases orthonormées de vecteurs polynomiaux s'effectue relativement à des intervalles U et V de tailles (2M + 1) et (2N+1) correspondant aux dimensions d'un bloc élémentaire de pixels $BE_{i,j}$.

Les coefficients $\mu_k$ et $\gamma_k$, où k est un entier, cités précédemment et définissant les coefficients des polynômes sont alors donnés par :

$$\mu_k = \sum_{u=-M}^{u=+M} u^k \qquad\qquad \gamma_k = \sum_{v=-N}^{v=+N} v^k \qquad (3)$$

Il est possible de définir, à partir de ce qui précède, des masques dérivateurs, permettant de créer le polynôme de luminances $f(u_o + u, v_o + v)$ qui est l'approximation des luminances respectives des pixels dans l'anneau d'un bloc $BE_{i,j}$.

Ces masques $K_{r,s}$, de dimension égale à la dimension d'un bloc élémentaire $BE_{i,j}$, telle que (7x7), sont donnés par :

$$K_{r,s}[u,v] \ = \ \sum_{e+f<dim} \frac{\lambda_e^r \lambda_f^s P_a^e(u) P_b^f(v)}{< P_a^e \mid P_a^e > < P_b^f \mid P_b^f >} \ , \qquad (4)$$

où

u et v désignent les coordonnées d'un pixel dans un bloc élémentaire à estimer ;

dim désigne l'une des deux dimensions égales E ou F des deux bases polynomiales respectives pour les deux dimensions de l'image, les indices entiers r et s variant respectivement de 0 à (E-1) et 0 à (F-1) ;

(e+f) est la somme des degrés de deux polynômes $P_a^e$ et $P_b^f$ appartenant aux deux bases polynomiales respectivement ; et

$\lambda_e^r$ et $\lambda_f^s$ désignent des coefficients des termes de degré r et s dans les polynômes $P_a^e$ et $P_b^f$ des deux bases polynomiales respectivement.

Le polynôme de luminance est alors défini par :

$$L(u_o+u, v_o+v) = k_{o,o} + k_{1,o}.u + k_{o,1}.v + k_{1,1}u.v + k_{2,o}.u^2 + k_{o,2}.v^2 + ... \qquad (5a)$$

avec

$$k_{r,s} = \sum_{(u,v) \in U \times V} K_{rs}[u,v] . I(u_o + u, v_o + v) \qquad (5b)$$

EP 0 604 245 B1

I(u,v) désignant la luminance d'un pixel de coordonnées (u,v).

Les deux dernières relations (5a) et (5b) sont à la base de la présente invention. L'approximation d'une image par un polynôme à deux variables est connue en soi. L'invention propose d'utiliser un tel modèle d'approximation polynomiale d'image dans le cadre d'une détection de cible.

Selon la présente invention, l'approximation polynomiale de chaque bloc élémentaire de pixel est limitée aux seuls pixels de l'anneau du bloc, et les luminances ponctuelles dans le trou dudit bloc élémentaire $BE_{i,j}$ sont prédites à partir de cette approximation polynomiale. Ces deux étapes sont matérialisées par les circuits 20 et 21 dans la figure 2.

En revenant aux équations précédentes (5a) et (5b), il apparaît que le polynôme de luminance f est entièrement connu à partir des coefficients $k_{r,s}$, r et s étant des entiers. Dans la relation (5a), les variables u et v désignent les abscisse et ordonnée d'un pixel, et f représente la luminance de ce pixel. Comme souligné par la relation (5b), les coefficients $k_{r,s}$ sont entièrement définis à partir de convolutions spatiales des masques $K_{r,s}$ et des luminances des pixels du bloc considéré $BE_{i,j}$. Ces masques constituent des filtres linéaires de convolution spatiale. En pratique, seuls quelques coefficients $k_{r,s}$ du polynôme de luminance L sont nécessaires pour estimer convenablement une luminance de pixel. Comme montré par la relation (5b), chaque coefficient du polynôme de luminance nécessite pour son calcul la définition d'un masque, ou filtre, de convolution $K_{r,s}$. L'approximation polynomiale étant réalisée selon l'invention, à partir des seuls pixels de l'anneau, dans la relation 5(b), le calcul des coefficients du polynôme de luminance ne s'effectue qu'en considérant les pixels de coordonnées (u,v) appartenant à l'anneau.

La figure 3 illustre une réalisation pratique des circuits 20 et 21 de la figure 2, sous la forme de six filtres de convolution 200 à 205 associés aux masques $K_{r,s}$, et un sommateur 206, tels que $0 \leq r,s \, s \leq 2$. Les six filtres de convolution 200 à 205 sont déduits, pour chaque bloc d'image $BE_{i,j}$ centré sur un pixel respectif $p_{i,j}$, à partir de l'équation (4) donnée précédemment. Chaque filtre 200 à 205 reçoit des blocs élémentaires de pixels $BE_{i,j}$ de l'image infrarouge numérisée d'origine $I_O$ pour produire par convolution respectivement des coefficients $k_{r,s}$ du polynôme de luminance L, conformément à l'équation (5b). A partir de ces coefficients $k_{r,s}$ de polynôme est déduite, pour chaque bloc de pixels $BE_{i,j}$, chacune des luminance(s) ponctuelle(s) prédites pour le(s) pixel(s) du trou dudit bloc $BE_{i,j}$, en remplaçant dans l'équation (5a) les variables u et v par les rangs en terme d'abscisse et d'ordonnée du(des) pixel(s) du trou. Le sommateur 206 recevant des sorties des filtres de convolution 200 à 205 produit en sortie, pour chaque bloc élémentaire $BE_{i,j}$ de l'image, une image prédite Ip constituée de(s) luminance(s) ponctuelle(s) du trou dans le bloc $BE_{i,j}$ prédites par approximation polynomiale.

En revenant à la figure 2, l'image prédite Ip et l'image d'origine infrarouge $I_O$, constituée de(s) luminance(s) réelle(s) de(s) pixel(s) du trou, sont fournies à deux entrées respectives du comparateur 22. Ce dernier produit en sortie une image de différence, notée $I_D$, représentative de la différence de luminance entre image d'origine $I_O$ et image prédite $I_P$.

Ainsi est obtenu le contraste entre un(des) luminances réelle(s) du(des) pixel(s) du trou et un(des) luminance(s) de ce trou prédite(s) à partir du modèle d'approximation polynomiale.

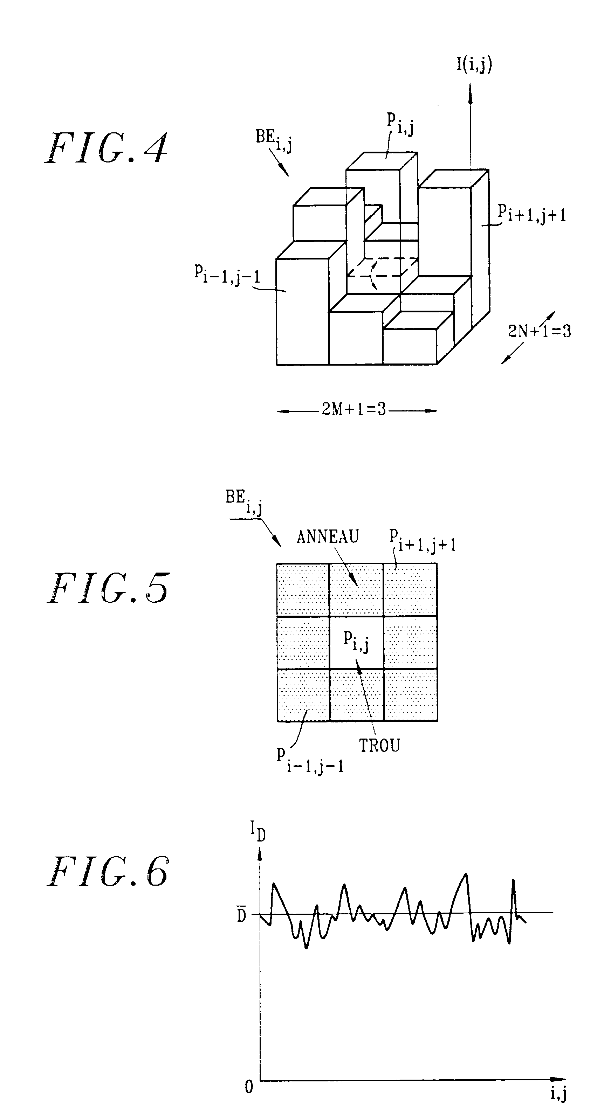

La figure 6 montre un signal d'image de différence entre luminances prédites et réèlles de pixels de trou pour les différents blocs élémentaires $BE_{i,j}$ d'une image. Il apparaît que ce signal de différence de luminance fluctue autour d'une différence moyenne de luminance notée $\bar{D}$.

En se reportant à la figure 2, l'image de différence $I_D$ est appliquée à une entrée du circuit de calcul de moyenne 23 qui produit la différence moyenne de luminance $\bar{D}$. Cette différence moyenne de luminance $\bar{D}$ est représentative du contraste moyen entre les luminances réelle(s) et prédites pour tous les trous dans les blocs élémentaires $BE_{i,j}$ de l'image. Cette différence moyenne de luminances $\bar{D}$ est appliquée à une première entrée du circuit de détection 24 dont une seconde entrée reçoit l'image de différence $I_D = (I_O - I_P)$. Pour chaque trou de chaque bloc élémentaire de l'image $I_O$, le(s) pixel(s) de l'image de différence $I_D$ correspondante est(sont) comparé(s) avec la différence moyenne $\bar{D}$ des luminances prédites et réelles. Une alarme est produite par le circuit 24 lorsque l'un (des) pixel(s) d'un trou de l'image de différence $I_D$ a(ont) une(des) luminance(s) très supérieure(s) à la différence moyenne de luminance $\bar{D}$.

En pratique, il est choisi un coefficient multiplicateur C qui est multiplié à la différence moyenne de luminance $\bar{D}$ pour fournir un produit $(C.\bar{D})$ qui est comparé à la luminance de chaque trou d'image de différence dans le circuit 24; en d'autres termes cette comparaison est équivalente à celle du rapport $I_D/\bar{D}$ et du coefficient C. Une augmentation de ce coefficient C abaisse le taux de fausses alarmes. Le choix du coefficient C résulte d'un compromis entre un faible taux de fausses alarmes et un faible taux de cibles non détectées.

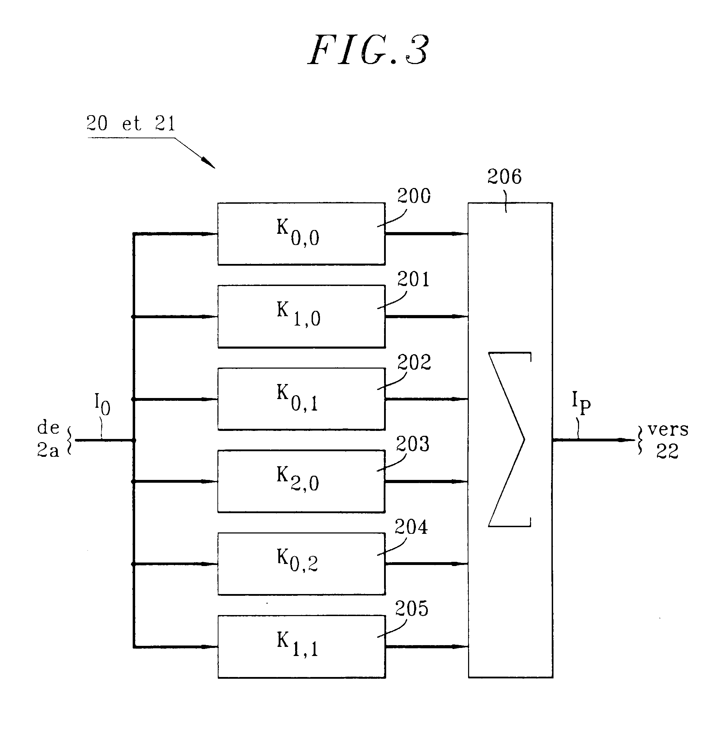

A titre d'exemple, la figure 4 illustre une détection de cible pour un pixel central d'un trou. Sur cette figure, deux luminances d'un pixel $P_{i,j}$ d'un trou respectivement indiquées en trait continu et en trait discontinu sont associées à des niveaux réel et prédit par approximation polynomiale. L'écart entre ces deux luminances déclenche une alarme dans le circuit de détection 24 s'il est supérieur au produit de la différence moyenne des luminances réelles et prédites $\bar{D}$ sur l'ensemble de l'image par le coefficient C.

5

**Revendications**

1. Procédé de détection d'apparition d'objets ponctuels dans une image numérisée sous la forme d'une pluralité de pixels ayant des luminances respectives, caractérisé en ce qu'il comprend pour chacun des blocs élémentaires de pixels ($BE_{i,j}$) centrés sur l'un respectif desdits pixels de l'image, les étapes suivantes :

   une approximation polynomiale (20) des luminances de pixels d'un anneau dudit bloc, ledit anneau étant composé des pixels dudit bloc ($BE_{i,j}$) situés à la périphérie d'un trou composé des autres pixels dudit bloc et localisé au centre dudit bloc ($BE_{i,j}$),
   une prédiction (21) des luminances desdits pixels du trou en fonction de ladite approximation polynomiale afin de produire des luminances prédites ($I_P$),
   une soustraction (22) desdites luminances prédites ($I_P$) aux luminances réelles des pixels ($I_O$) dudit trou, donnant des luminances de différence ($I_D$), et
   une détection (23,24) d'objet ponctuel dans ledit bloc ($BE_{i,j}$) lorsque le rapport de l'une desdites luminances de différence ($I_D$) relatives audit trou et d'une moyenne de luminances de différence ($\bar{D}$) sur l'ensemble de ladite image, est supérieur à un seuil prédéterminé (C).

2. Procédé conforme à la revendication 1, caractérisé en ce que ladite approximation polynomiale consiste en la détermination de filtres de convolution ($K_{r,s}$) à partir de bases polynomiales orthonormées ($P_a^e$, $P_b^f$) relatives respectivement à des dimensions (u,v) de l'image, et en des convolutions desdits pixels de l'anneau avec lesdits filtres de convolution ($K_{r,s}$) en des coefficients respectifs ($k_{r,s}$) d'un polynôme (L).

3. Procédé conforme à la revendication 2, caractérisé en ce que lesdites luminances prédites sont des valeurs prises par ledit polynôme (L) pour des valeurs de coordonnées desdits pixels du trou.


**Patentansprüche**

1. Verfahren zur Erscheinungsdetektierung von Punktgegenständen in einem in Form einer Vielzahl von Pixeln mit zugehörigen Luminanzwerten digitalisierten Bild, dadurch gekennzeichnet, daß es für jeden der elementaren Pixelblöcke ($BE_{i,j}$), die jeweils um eins dieser Pixel des Bildes zentriert sind, die folgenden Schritte umfaßt:

   eine Polynomialnäherung (20) der Luminanzwerte der Pixel eines Ringes dieses Blockes, wobei dieser aus den Pixeln des Blockes ($BE_{i,j}$) besteht, die an der Peripherie eines Loches liegen, das aus den anderen Pixeln des Blockes besteht und sich in der Mitte des Blockes ($BE_{i,j}$) befindet,
   einer Voraussage (21) der Luminanzen der Pixel des Loches in Abhängigkeit von dieser Polynomialnäherung, um vorausgesagte Luminanzwerte ($I_p$) zu bilden,
   eine Subtraktion (22) dieser vorausgesagten Luminanzwerte ($I_p$) von den tatsächlichen Luminanzwerten der Pixel ($I_o$) des Loches, was Differenzluminanzwerte ($I_o$) ergibt, und
   eine Detektierung (23, 24) eines Punktgegenstandes im Block ($BE_{i,j}$), wenn das Verhältnis eines der sich auf das Loch beziehenden Differenzluminanzwerte ($I_D$) zu einem Mittelwert von Differenzluminanzwerten ($\bar{D}$) über die Gesamtheit des Bildes größer ist, als ein vorher festgelegter Schwellenwert (C).

2. Verfahren nach Patentanspruch 1, dadurch gekennzeichnet, daß die genannte Polynomialnäherung in der Bestimmung von Faltungsfiltern ($K_{r,s}$) ausgehend von orthonormierten Polynomialbasen ($P_a^e$, $P_b^f$), die sich jeweils auf die Abmessungen (u, v) des Bildes beziehen, besteht und in Faltungen der Pixel des Ringes mit diesen Faltungsfiltern ($K_{r,s}$) zu den jeweiligen Koeffizienten ($k_{r,s}$) eines Polynomes (L).

3. Verfahren nach Patentanspruch 2, dadurch gekennzeichnet, daß die vorausgesagten Luminanzwerte Werte sind, die das Polynom (L) für Koordinatenwerte der Pixel des Loches annimmt.


**Claims**

1. A method of detecting the appearance of dot objects in a digitised image in a form of a plurality of pixels having respective luminances, characterised in that it comprises the following steps for each of the elementary blocks of pixels ($BE_{i,j}$) centred on the respective one of the said pixels of the image:

a polynomial approximation (20) of the luminances of pixels of a ring of said block, the said ring being composed of the pixels of the said block ($BE_{i,j}$) situated at the periphery of a hole composed of the other pixels of the said block and located at the centre of the said block ($BE_{i,j}$),

a prediction (21) of the luminances of the said pixels of the hole in dependence on the said polynomial approximation in order to produce predicted luminances (Ip),

a subtraction (22) of the said predicted luminances (Ip) from the real luminances of the pixels ($I_O$) of the said hole, giving differential luminances ($I_D$) and,

a detection (23, 24) of a dot object in the said block ($B_{i,j}$) when the ratio of one of the said differential luminances ($I_D$) relative to the said hole and of an average of differential luminances ($\bar{D}$) over the whole of the image is greater than a predetermined threshold (C).

2. A method according to claim 1, characterised in that the said polynomial approximation consists in determining convolution filters ($K_{r,s}$) from orthonormal polynomial bases ($P_a^e$, $P_b^f$) relative respectively to dimensions (u, v) of the image, and in convolutions of the said pixels of the ring with the said convolution filters ($K_{r,s}$) in respective coefficients ($K_{r,s}$) of a polynomial (L).

3. A method according to claim 2, characterised in that the said predicted luminances are values assumed by the said polynomial (L) for values of co-ordinates of the said pixels of the hole.

# FIG. 1

YY'

1a

1

1b

ACQUISITION 2a

MODULE DE DETECTION (FIG.2) 2

ALARMES

MODULE DE PISTAGE 3

# FIG. 2

MODULE DE DETECTION 2

de 2a

$I'_0$

ESTIMATION SUR ANNEAU (FIG.3) 20

PREDICTION SUR TROU 21

$I_P$

$I_D = (I_0 - I_P)$

22

$I_0^-$

MOYENNE 23

$\bar{D}$

DETECTION $I_0 - I_P \geqslant C\bar{D}$ 24

ALARMES

EP 0 604 245 B1

# *FIG.3*

20 et 21

| | 200 | 206 |
| K$_{0,0}$ | | |

| | 201 |
| K$_{1,0}$ | |

| | 202 |
| K$_{0,1}$ | |

de 2a { $I_0$

| | 203 |
| K$_{2,0}$ | |

$I_p$  } vers 22

| | 204 |
| K$_{0,2}$ | |

| | 205 |
| K$_{1,1}$ | |

*FIG.4*

$BE_{i,j}$

$p_{i,j}$

$I(i,j)$

$p_{i+1,j+1}$

$p_{i-1,j-1}$

$2N+1=3$

$2M+1=3$

*FIG.5*

$BE_{i,j}$

ANNEAU

$p_{i+1,j+1}$

$p_{i,j}$

$p_{i-1,j-1}$

TROU

*FIG.6*

$I_D$

$\bar{D}$

0

$i,j$